(19) Europäisches Patentamt

European Patent Office

Office européen des brevets

(11) **EP 1 675 388 A1**

(12) **DEMANDE DE BREVET EUROPEEN**

(43) Date de publication:
**28.06.2006 Bulletin 2006/26**

(51) Int Cl.:
*H04N 5/40* (2006.01)    *H04N 7/08* (2006.01)

(21) Numéro de dépôt: **05380132.0**

(22) Date de dépôt: **17.06.2005**

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(30) Priorité: **22.12.2004 ES 200403046**

(71) Demandeur: **Angel Iglesias S.A.**
**20009 San Sebastian (ES)**

(72) Inventeur: **Vidaurreta Coscojuela, Luis**
**20009 San Sebastian (Gipuzkoa) (ES)**

(74) Mandataire: **Urizar Barandiaran, Miguel Angel**
**Gordoniz, 22-5**
**P.O.Box 6454**
**48012 Bilbao (Vizcaya) (ES)**

(54) **Modulateur de télévision double bande latérale**

(57) Modulateur de télévision double bande latérale, qui comprend un dispositif modulateur double bande latérale (1) qui génère, comme fréquence intermédiaire ($f_i$), un signal porteur modulé en amplitude avec le signal vidéo (PV) et un signal porteur modulé en FM ou AM avec le signal audio (PA); un filtre (2) à la fréquence de passage égale à la fréquence intermédiaire (fi) générée par le dispositif modulateur (1); et un dispositif mélangeur/oscillateur variable (3) non linéaire, qui se compose d'un mélangeur ($m_2$) et d'un oscillateur ($OL_3$) à fréquence variable ($f_o$) contrôlé par un PLL ($PL_3$), le mélangeur ($m_2$) produisant un signal de fréquence ($f_s$) qui est la différence entre la fréquence variable ($f_o$) de l'oscillateur ($OL_3$) et la fréquence intermédiaire ($f_i$): $f_s = f_o - f_i$

Fig. 1

EP 1 675 388 A1

**Description**

Actuellement, la bande de fréquence de la télévision se trouve entre 45 et 862 MHz.

Pour couvrir tout ce spectre, on dispose de trois modèles de modulateurs qui couvrent, respectivement, les bandes de 45 à 145 MHz, de 145 à 471 MHz et de 471 à 885 MHz.

La fabrication, le transport, la logistique et la manipulation de trois modèles de modulateurs est un problème amplement ressenti dans toute la chaîne du monde de la télévision.

L'objet de l'invention résout le problème mentionné en réussissant à couvrir, avec un seul modulateur, l'ensemble du spectre des fréquences de télévision de 45 à 862 MHz.

Les modèles de modulateurs connus se composent successivement de : un dispositif modulateur-filtre- mélangeur/ oscillateur- filtre- mélangeur/ oscillateur, autrement dit d'une étape de modulation et de deux étapes successives de conversion.

La causa intrinsèque de la fabrication de trois modèles de modulateurs réside dans les limitations physiques des oscillateurs dans la gamme des fréquences qui n'atteignent qu'une octave, autrement dit dans le fait de doubler la fréquence.

Pour résoudre le problème, le modulateur de l'invention module sur une double bande latérale à une fréquence intermédiaire qui n'a besoin que d'une seule conversion pour atteindre la fréquence voulue à la sortie.

Le modulateur de télévision double bande latérale, qui fait l'objet de l'invention, comprend :

a) un dispositif modulateur double bande latérale, qui génère, comme fréquence intermédiaire, un signal porteur modulé en amplitude avec le signal vidéo, et un signal porteur modulé en FM ou AM avec le signal audio,

b) un filtre ayant une fréquence de passage égale à la fréquence produite par le dispositif modulateur, grâce auquel sont éliminées les fréquences indésirables venant du modulateur avant la conversion,

c) un dispositif mélangeur/oscillateur variable non linéaire, qui génère des fréquences d'intermodulation de deuxième et troisième ordres issues du mélange du signal modulateur et de l'oscillateur, le produit de l'intermodulation de deuxième ordre résultant de la différence entre la fréquence de l'oscillateur et la fréquence du dispositif modulateur étant ce qui nous donnera la fréquence de sortie variable, modulée sur double bande latérale.

Dans ce modulateur de télévision double bande latérale, la fréquence de passage du filtre est la même que la fréquence générée par le dispositif modulateur.

Dans ce modulateur de télévision double bande latérale, ledit dispositif modulateur est constitué par un dispositif qui remplit les fonctions de modulation vidéo et audio intégrées, la fréquence de sortie pouvant en être programmée.

Dans ce modulateur de télévision double bande latérale, ledit filtre est un filtre passe-bande, constitué par des éléments distribués (L,C) ou bien il s'agit d'un dispositif ayant les fonctions d'un filtre passe-bande intégrées, mais ce pourrait être un filtre passe-bas constitué par des éléments distribués (L,C) ou bien il s'agit d'un dispositif ayant les fonctions d'un filtre passe-bas intégrées.

Dans ce modulateur de télévision double bande latérale, ledit dispositif mélangeur/oscillateur variable non linéaire, le mélangeur est un dispositif qui remplit la fonction de mélangeur intégrée et l'oscillateur variable est un dispositif qui remplit les fonctions d'oscillateur variable intégrées, la fréquence de cet oscillateur étant programmée au moyen d'un PLL à fréquence synthétisée.

Ledit dispositif mélangeur/oscillateur variable est également un dispositif qui remplit les fonctions de mélangeur, d'oscillateur variable et de PLL, intégrées dans un seul dispositif.

Dans ce modulateur de télévision double bande latérale, ledit dispositif mélangeur/oscilalteur, la fréquence est fonction de la fréquence de sortie choisie à chaque instant et répond à l'équation :

$$f_o = f_m + f_s$$

où:

$f_o$ = Fréquence de l'oscillateur
$f_m$ = Fréquence du modulateur
$f_s$ = Fréquence de sortie

la fréquence de sortie ($f_s$) étant comprise entre 45 MHz et 885 MHz.

Le signal de télévision produit est acceptable pour un téléviseur de n'importe quelle norme existante, sans besoin de changer aucun composant, en changeant simplement les configurations de programmation.

Ce modulateur de télévision double bande latérale génère un canal de télévision analogique dans les systèmes BG, DK, I, L et MN sur la bande des fréquences comprises entre 45 MHz et 885 MHz.

Pour mieux comprendre l'objet de la présente invention, on a représenté sur les plans une forme préférentielle de réalisation pratique, susceptible de changements accessoires qui n'en dénaturent pas le fondement.

La figure 1 est un diagramme de blocs du modulateur qui fait l'objet de l'invention.

La figure 2 est un diagramme de blocs du dispositif modulateur (1) de la figure 1.

On décrit ci-dessous un exemple de réalisation pratique, non limitative, de la présente invention.

Le modulateur qui fait l'objet de l'invention se compose, en connexion successive, d'un dispositif modulateur (1), d'une filtre (2) et d'un dispositif mélangeur/oscillateur (3).

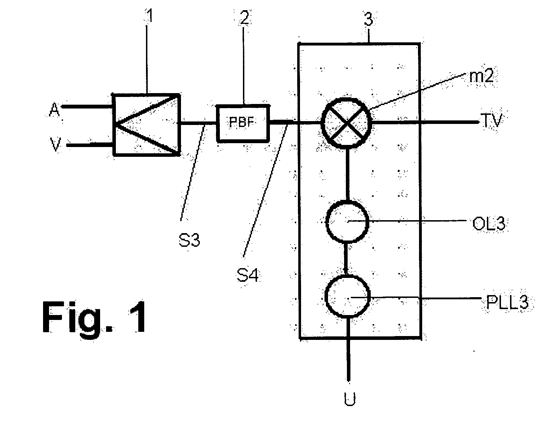

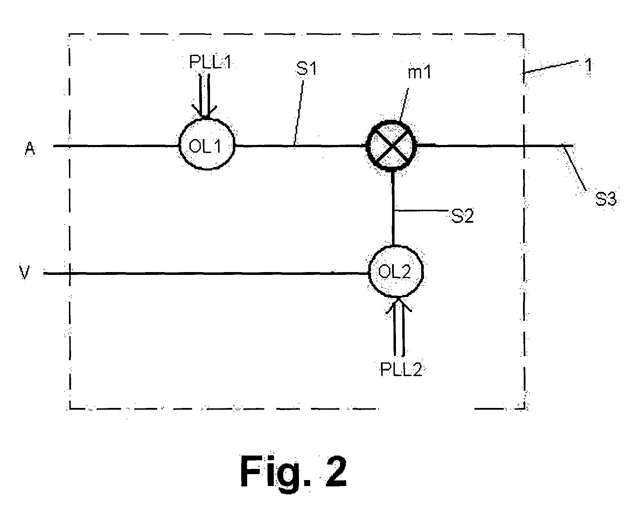

Le signal audio (A) et le signal vidéo (V) arrivent au dispositif modulateur double bande latérale (1) (figures 1 et 2).

Dans le dispositif modulateur (1) d'une réalisation pratique, le signal audio (A) arrive à un premier oscillateur ($OL_1$) variable commandé par un premier PLL ($PLL_1$) (phase-locked loop) et le signal vidéo (V) arrive à un second oscillateur ($OL_2$) variable commandé par un second PLL ($PLL_2$), les signaux de sortie (Si), ($S_2$) du premier et du second oscillateurs ($OL_1$), ($OL_2$) étant mélangés dans un premier mélangeur ($m_1$) qui donne lieu à un signal de sortie ($S_3$) qui, comme fréquence intermédiaire ($f_i$) se compose d'un signal porteur modulé en amplitude avec le signal vidéo (PV) et un signal porteur modulé en fréquence en FM ou AM avecle signal audio (A).

Le signal de sortie ($S_3$) du dispositif modulateur (1) voit se doubler et s'invertir le spectre des fréquences, et se compose, en conséquence, en plus de la fréquence intermédiaire ($f_i$) voulue de fréquences multiples $2f_i$, $3f_i$, $4f_i$, etc. (indésirables), les bruits propres au système (indésirables).

Le signal de sortie ($S_3$) est envoyé à un filtre (2) passe-bande dont la fréquence de passage est la fréquence intermédiaire ($f_i$) de ce signal de sortie ($S_3$).

Comme on l'a déjà dit, le signal vidéo modulé (PV) possède la fréquence intermédiaire ($f_i$) qui est celle que l'on souhaite maintenir.

Usuellement, les fréquences inférieures à la fréquence intermédiaire ($f_i$) peuvent être négligées, ce qui fait que, fondamentalement, le filtre (2) éliminera les fréquences multiples $2f_i$, $3f_i$, $4f_i$, etc.

Le filtre (2) peut être un filtre passe-bande ou un filtre passe-bas constitué conventionnellement par des éléments distribués (L,C) conventionnels ou ayant leurs fonctions intégrées d'un mode également conventionnel.

Le signal de sortie ($S_4$) du filtre (2), qui aura essentiellement la fréquence intermédiaire ($f_i$), est envoyé à un dispositif mélangeur/oscillateur (3) qui comprend un second mélangeur ($m_2$) intégré et un troisième oscillateur variable ($OL_3$) dont les fonctions sont intégrées et qui est contrôlé par un troisième PLL ($PLL_3$) de fréquence synthétisée, le tout étant intégré dans un seul dispositif avec le PLL à la disposition fr l'utilisateur (U).

Un mélangeur est un élément non linéaire et le second mélangeur ($m_2$) génère des signaux ayant des fréquences d'intermodulation de deuxième et troisième ordres issues du mélange du signal de sortie ($S_4$) du filtre (2) et du troisième oscillateur ($OL_3$).

La fréquence d'intermodulation ($f_s$) recherchée à la sortie est celle de deuxième ordre issue de la différence entre la fréquence ($f_o$) du troisième oscillateur ($OL_3$) et la fréquence intermédiaire ($f_i$) de sortie du dispositif modulateur (1) qui est la fréquence ($f_i$) du signal de sortie ($S_4$) du filtre (2):

$$f_s = f_o - f_i$$

La fréquence d'intermédiation (fs) à la sortie correspond à celle d'un canal de télévision, c'est-à-dire qu'elle doit être comprise entre des valeurs établies :

$$45 \text{ MHz} \leq f_s \leq 885 \text{ MHz}$$

Les oscillateurs sont synthétisés.

À la sortie du dispositif mélangeur/oscillateur (3), on peut mettre des filtres et/ou des atténuateurs ou d'autres éléments conventionnels d'adaptation à l'installation générale.

Étant donné les limitations physiques des oscillateurs qui, dans la gamme des fréquences est d'une octave (leur maximum est de doubler) c'est-à-dire des limitations pour $f_o$ dans l'équation précédente, on appréciait qu'une fréquence intermédiaire ($f_i$) la plus élevée possible était souhaitable, mais, étant donné la configuration du modulateur de l'invention, la fréquence ($f_2$) du second oscillateur ($OL_2$) du dispositif modulateur coïncide avec la fréquence intermédiaire ($f_i$), ce qui fait qu'en contrôlant le second PLL ($PLL_2$) voire en le fixant, pour atteindre les valeurs élevées voulues, il ne reste plus à l'utilisateur (U) que la solution de manipuler de façon usuelle le troisième PLL ($PLL_3$) pour obtenir le canal de télévision souhaité.

Exemple

On utilise comme dispositif modulateur (1) un TDA6060XS de la firme INFINEON, comme filtre (2) un SAF947 de la firme MURATA et comme synthétiseur du dispositif mélangeur/oscillateur (3) un SL2101 de la firme ZARLINK, ce qui permet d'obtenir de bons résultats.

Revendications

**1.** Modulateur de télévision double bande latérale, **se caractérisant par le fait qu'**il comprend :

a) un dispositif modulateur double bande latérale (1) qui génère, comme fréquence intermédiaire ($f_i$), un signal porteur modulé en amplitude avec le signal vidéo (PV) et un signal porteur modulé en FM ou AM avec le signal audio (PA);
b) un filtre (2) de fréquence de passage égale à la fréquence intermédiaire ($f_i$) générée par le dispositif modulateur (1);
c) un dispositif mélangeur/oscillateur variable (3) non linéaire, qui se compose d'un mélangeur $(m_2)$ et d'un oscillateur $(OL_3)$ à fréquence variable $(f_o)$ contrôlé par un PLL $(PL_3)$, le mélangeur $(m_2)$ générant un signal de fréquence $(f_s)$ qui est la différence entre la fréquence variable $(f_o)$ de l'oscillateur $(OL_3)$ et la fréquence intermédiaire $(f_i)$ :

$$f_s \ = \ f_o \ - \ f_i$$

**2.** Modulateur de télévision double bande latérale, selon la revendication antérieure, **se caractérisant par le fait que** le dispositif modulateur (1) comprend deux oscillateurs $(OL_1)$, $(OL_2)$ dont les fréquences variables sont contrôlées pa deux PLL $(PLL_1)$, $(PLL_2)$, l'un des oscillateurs $(OL_2)$ recevant le signal vidéo (V) et l'autre $(OL_1)$ le signal audio (A) et envoyant sa sortie $(S_2)$, $(Si)$ à un mélangeur (Mi), de sorte qu'ayant les fonctions de modulation vidéo et audio intégrées, sa fréquence de sortie puisse être programmée.

**3.** Modulateur de télévision double bande latérale, selon les revendications antérieures, **se caractérisant par le fait que** dans ledit dispositif mélangeur/ oscillateur variable (3) non linéaire, le mélangeur (3a) est un dispositif qui remplit la fonction de mélangeur intégrée et l'oscillateur variable (3b) est un dispositif qui remplit les fonctions d'oscillateur variable integrées, la fréquence de cet oscillateur étant programmée au moyen d'un PLL à fréquence synthétisée.

**4.** Modulateur de télévision double bande latérale, selon la revendication 3, **se caractérisant par le fait que** ledit dispositif mélangeur/oscillateur variable (3) est également un dispositif qui remplit les fonctions de mélangeur, oscillateur variable et PLL integrées dans un seul dispositif.

A ────

V ────

1

PBF  2

3

m2

──── TV

S3

S4

OL3

PLL3

U

# Fig. 1

**Fig. 2**

**Office européen**
**des brevets**

**RAPPORT DE RECHERCHE EUROPEENNE**

Numéro de la demande

EP 05 38 0132

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | WO 01/47260 A (ENCAMERA SCIENCES CORPORATION) 28 juin 2001 (2001-06-28) <br> * abrégé * <br> * page 2, ligne 18-25 * <br> * page 12, ligne 4-9 * <br> * page 17, ligne 23-32 * <br> * figure 5a * <br> ----- | 1-4 | H04N5/40 <br> H04N7/08 |
| Y | WO 01/06768 A (THOMSON LICENSING S.A; MAYER, MATTHEW, THOMAS) 25 janvier 2001 (2001-01-25) <br> * page 4, ligne 3-15 * <br> ----- | 1-4 | |

**DOMAINES TECHNIQUES RECHERCHES (IPC)**

H04N
H03C

Le présent rapport a été établi pour toutes les revendications

| Lieu de la recherche | Date d'achèvement de la recherche | Examinateur |
|---|---|---|
| Munich | 28 mars 2006 | Lauri, L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................
& : membre de la même famille, document correspondant

EPO FORM 1503 03.82 (P04C02)

**EP 1 675 388 A1**

**ANNEXE AU RAPPORT DE RECHERCHE EUROPEENNE**
**RELATIF A LA DEMANDE DE BREVET EUROPEEN NO.**

EP 05 38 0132

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-03-2006

| Document brevet cité au rapport de recherche | | Date de publication | Membre(s) de la famille de brevet(s) | | Date de publication |
|---|---|---|---|---|---|
| WO 0147260 | A | 28-06-2001 | AU | 2081801 A | 03-07-2001 |
| | | | CA | 2395810 A1 | 28-06-2001 |
| | | | EP | 1249125 A1 | 16-10-2002 |
| | | | JP | 2003518839 T | 10-06-2003 |
| | | | MX | PA02006191 A | 09-12-2002 |
| WO 0106768 | A | 25-01-2001 | AU | 6345100 A | 05-02-2001 |
| | | | CN | 1361977 A | 31-07-2002 |
| | | | EP | 1197071 A1 | 17-04-2002 |
| | | | JP | 2004519871 T | 02-07-2004 |
| | | | MX | PA02000558 A | 02-07-2002 |
| | | | TW | 484315 B | 21-04-2002 |

EPO FORM P0460

Pour tout renseignement concernant cette annexe : voir Journal Officiel de l'Office européen des brevets, No.12/82